# EUROPÄISCHE PATENTANMELDUNG

(11) **EP 1 533 537 A2**
(43) Veröffentlichungstag der Anmeldung: **25.05.2005**
(21) Anmeldenummer: 04105808.2
(22) Anmeldetag: 16.11.2004
(51) Int. Cl.: F16D 65/20

(54) **Rillierter Scheibenbremsdichtring**

(30) Priorität: 18.11.2003 DE 10353827
(71) Anmelder: Continental Teves AG & Co. OHG, 60488 Frankfurt am Main (DE)
(72) Erfinder: Kircher, Andreas, 64297 Darmstadt (DE)

(57) **Zusammenfassung**

Die Erfindung betrifft einen Dichtring einer Kolben-Zylinder-Einheit vorzugsweise innerhalb einer Kraftfahrzeugscheibenbremse. Derartige Dichtringe werden während des Bremsbetriebs unter anderem auch zur Lüftspieleinstellung genutzt. Dazu besitzt der Dichtring vorzugsweise eine dem Kolben (2) beziehungsweise dem Zylinder zugewandte, unebenen Lauffläche (13). Zur Verbesserung der Dichtringfunktion und dabei insbesondere der Lüftspieleinstellung ist vorgesehen, dass die Lauffläche (13) mit mindestens einer umlaufenden vorzugsweise ringförmigen Ausnehmung versehen ist, die in Verbindung mit der Mantelfläche (44) des Kolbens (2) beziehungsweise des Zylinders eine ringförmige Kammer (45) bildet. Durch eine solche Laufflächengestaltung wird neben der verbesserten Dichtringfunktion noch eine einfache Dichtringherstellung ermöglicht.

## Beschreibung

Die Erfindung betrifft einen Dichtring einer Kolben-Zylinder-Einheit gemäß dem Oberbegriff des Patentanspruches 1.Auf der Seite 148 der 9. Auflage 1986 des Ate-Bremsenhandbuches ist die Wirkungsweise eines solchen Dichtringes beschrieben. Der in einer Nut eines Sattelgehäuses befindliche Gummidichtring, der einen Kolben mit Vorspannung umfaßt, wird bei einer Bremsbewegung des Kolbens durch eine vorhandene Haftreibung infolge seiner Elastizität seitlich verspannt. Der Kolben wird nach dem Lösen des Bremspedales infolge der seitlichen Verspannung sowie der Elastizität des Gummidichtringes von diesem in seine Lösestellung zurückgezogen (Roll-back-Verhalten). Speziell bei Einsatz von Gummi für diese Dichtung zeigt sich ein starkes bzw. zumindest sehr variables und auch zeitabhängiges Klebverhalten des Gummis auf der Kolbenoberfläche, obwohl die Dichtungen vor bzw. bei der Montage mit Schmiermittel benetzt werden. Dieses Verhalten führt zu vergrößerten Lüftspielen, welche durch-die RollbackBewegung bei der Zusammenarbeit zwischen Kolben und Dichtung erzeugt werden, zumindest aber zu großen Streuungen der Lüftspiele (Lüftspiel ist die freie Distanz der Beläge zwischen Scheibe und Belagoberfläche, welche sich nach der Bremsbetätigung einstellt). Gleiche Verhaltensweise besteht beim Knockback-Verhalten des Kolbens. Die Knock-back-Bewegung ist die der Roll-back-Bewegung entgegengesetzt ausgeführte Bewegung des Kolbens bei Kurvenfahrt oder bei Scheibenschlag. Schlechtes Rollback und Knock-back-Verhalten führt zu großen Pedalhüben, welches gleichermaßen sowohl ein Sicherheitsrisiko als auch ein Komfortproblem darstellt.

Ergänzend dazu ist es aus der DE-AS 16 00 008 bekannt, das Rückstellverhalten eines gattungsgemäßen Dichtringes durch Erhöhung des Reibungskoeffizienten zwischen Dichtring und Kolben zu beeinflussen. Dazu wird vorgeschlagen, den Kolben entweder komplett oder aber zumindest an seiner Mantelfläche nicht aus Metall, sondern aus Kohle bzw. Graphit herzustellen. Dies erfordert einen aufwendig zu fertigenden Kolben, der hinsichtlich seiner thermischen und mechanischen Eigenschaften nicht für alle Anwendungsfälle zufriedenstellende Ergebnisse liefert.

Schließlich ist der DE-OS 3800679 eine Dichtvorrichtung zu entnehmen, bei der ein Dichtungsring zur Verminderung des Klebeffektes an seiner einem beweglichen Bauteil zugewandten Lauffläche eine aufgerauhte Fläche aufweist. Untersuchungen haben ergeben, dass bei Einsatz eines aufgerauten Dichtringes (im Gegensatz zum glatten Dichtring) ein Flüssigkeitsfilm zwischen Kolben und Dichtring gebildete wird, durch den ein Kleben weitgehend verhindert werden kann (in den Rauhtiefen existiert eine Flüssigkeitspolster welches Kolben und Dichtring vor Kleben schützt). Nachteilig bei Einsatz eines derartigen rauen Dichtringes ist eine Verringerung des Lüftspiels. Dies kann in der Anwendung zu erhöhten Restmomenten bzw. DTV/Rubbeln führen. Nachteilig ist weiterhin, daß der Dom, von dem der Dichtring bei seiner Herstellung seine rauhe Struktur erhält, im Laufe des Fertigungsablaufes verschmutzt. Der bekannte Dichtring besitzt zusätzlich eine stochastisches Rautiefe die aufwändig in der Reinigung ist.
Die vorliegende Erfindung geht er daher aus von einem Dichtring der sich aus dem Oberbegriff des Anspruchs 1 ergebenden Gattung. Aufgabe der Erfindung ist es einen derartigen Dichtring anzugeben, der zum einen ein Lüftspielverhalten zeigt wie dies bei einem idealerweise nicht klebenden glatten Dichtring der Fall ist und zum anderen aber gegen ein Kleben an dem abzudichten, gegenüber dem Dichtring sich bewegenden Bauteil insbesondere dem Kolben weitgehend unempfindlich ist. Der Dichtring soll somit also Flüssigkeitspolster unter Dichtfläche besitzen, zum anderen ein dem idealerweise exakt arbeitenden glatten Dichtring vergleichbares Lüftspielverhalten zeigen. Der Dichtring soll weiterhin relativ einfach zu fertigen sein und das zur Fertigung dienende Werkzeuge soll sich leicht säubern lassen.

Die Aufgabe wird bei dem gattungsgemäßen Dichtring durch die sich aus dem kennzeichnenden Teil des Anspruchs 1 ergebende Merkmalskombination gelöst. Die Erfindung besteht im Prinzip also darin, daß der Dichtring mit der Kolbenfläche eine oder mehrere umlaufenden Kammern bildet, welche sich mit hydraulischer Flüssigkeit füllen können und somit ein Kleben des Dichtringes auf dem Kolben verhindern. Bei dem Gießen des Dichtringes werden zwar durch die Ausnehmungen Hinterschneidungen gegenüber der Gußform gebildet. Die Fertigung wird hierdurch aber kaum behindert, da der Dichtring aus einem elastischen Material besteht und somit leicht aus der Gußform gezogen werden kann. Obwohl in die Auflagefläche des erfindungsgemäßen Dichtringes auf dem Kolben stark verkleinert ist sorgen die schmalen, auf dem Kolben aufsitzenden umlaufenden Stege für eine hinreichende Reibung und Dichtung, da sie durch entsprechende scharfe Kanten die angrenzende Flüssigkeit verdrängen und so ziemlich fest auf der Mantelfläche des Kolbens aufliegen.

Die Höhe der erwünschten Reibung läßt sich durch die Anzahl der in axialer Richtung nebeneinanderliegenden Anzahl der Kammern für das jeweilige Bremssystem recht genau einstellen, wie dies in Zusammenhang mit der Merkmalskombination nach Anspruch 2 als vorteilhafte Weiterbildung der Erfindung erläutert wird.

Vielfach ist es erwünscht die Dichtringe von einem schlauchförmigen Rohmaterial abschneiden zu können. Besonders in diesem Falle empfiehlt sich in Weiterbildung der Erfindung die Merkmalskombination nach Anspruch 3, da hierbei die Lage der Schnittfläche weniger kritisch ist. Dies gilt insbesondere wenn die Ausnehmungen gleichmäßig über die dichtende Fläche des Dichtringes verteilt sind.

Die Erfindung wird nachfolgend anhand eines Ausführungsbeispieles in der Zeichnung näher erläutert.

Es zeigen
Fig. 1 eine Kolben-Zylinder-Einheit mit Dichtring in Ruhestellung,
Fig. 2 eine Kolben-Zylinder-Einheit bei Bremsbetätigung,
Fig. 3 einen erfindungsgemäßen Dichtring..

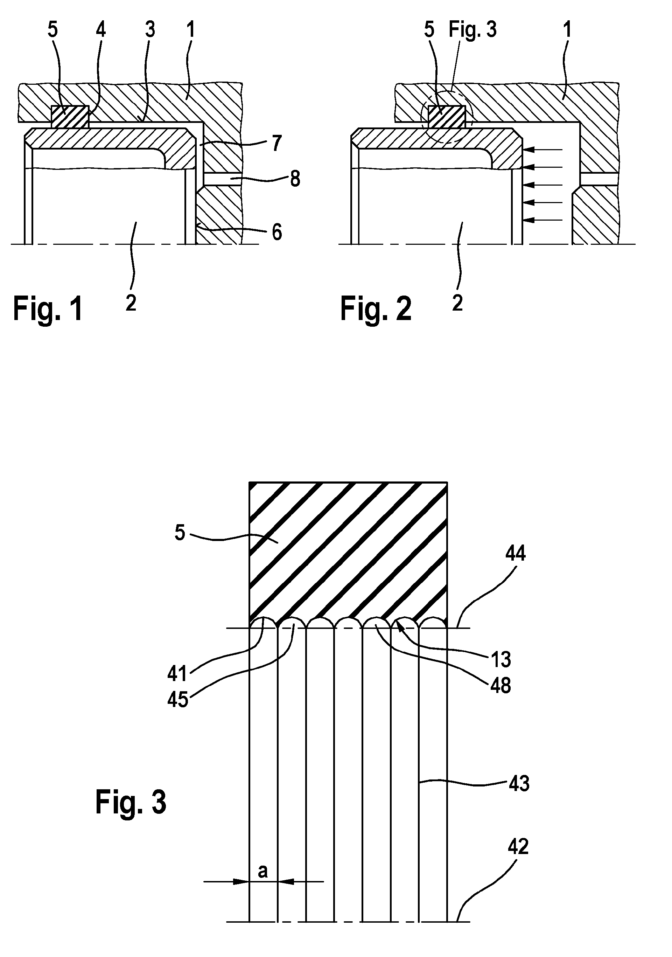

Fig. 1 zeigt eine Kolben-Zylinder-Einheit im Schnittdarstellung. Ein Sattelgehäuse 1 weist eine aus einem Kolben 2 und einem Zylinder 3 bestehende Kolben-Zylinder-Einheit 2, 3 auf. In einer Nut 4 des Sattelgehäuses 1 ist ein Dichtring 5 angeordnet. Der Zylinder 3 weist einen Boden 6 mit einer Ringnut 7 auf. Zu der Ringnut 7 ist ein Bohrungskanal 8 geführt.

Fig. 2 zeigt eine Kolben-Zylinder-Einheit 2, 3, die Teil einer Scheibenbremse ist, bei Bremsbetätigung. Beim Betätigen des Bremspedals wird in einem hydraulischen System (Rohrleitungen, Bremsschlauchleitungen und Zylinder) vorhandene Bremsflüssigkeit durch die auf den Hauptzylinderkolben übertragene Bremspedalkraft unter hydraulischen Überdruck gesetzt. Infolge des so entstandenen Überdruckes schieben die Kolben 2 einer Scheibenbremse unter Überwindung des Lüftspiels zwischen Belag und Bremsscheibe die vor ihnen angeordneten Bremsbeläge von beiden Seiten gleichzeitig gegen die Reibflächen der umlaufenden Bremsscheibe und pressen sie gleich stark an. Das Maß der Bremswirkung wird u. a. durch die Stärke der Belaganpressung bestimmt. Die Belaganpressung wiederum steigt mit der auf das Bremspedal wirkenden Fußkraft bzw. mit dem erzeugten hydraulischen Überdruck. Beim Lösen des Bremspedals wird der Hauptzylinderkolben durch seine Druckfeder in die Ausgangsstellung zurückgeschoben, das hydraulische System zur Scheibenbremse wird vollkommen drucklos. Der in einer Nut des Sattelgehäuses befindliche Gummidichtring, der den Kolben mit Vorspannung umfaßt, wurde bei der Bremsbewegung des Kolbens durch die vorhandene Haftreibung infolge seiner Elastizität seitlich verspannt. Der Kolben wird, nach dem Lösen des Bremspedals, infolge der seitlichen Verspannung sowie der Elastizität des Gummidichtringes von diesem in seine Lösestellung zurückgezogen. Das Luftspiel zwischen Bremsscheibe und Bremsbelag beträgt auf jeder Seite der Bremsscheibe max. 0,15 mm. (Auch bei Belagverschleiß bleibt das Lüftspiel durch die selbsttätige Nachstellung erhalten). Die Bremsscheibe kann sich nach dem Lösen der Bremse wieder frei drehen. Bei größer werdendem Lüftspiel durch Belagverschleiß muß der Kolben einen größeren Weg als bisher zurücklegen, wobei er dann durch den Gummiring rutscht, weil dessen Rückspannkraft kleiner als die Reibkraft geworden ist. Das Nachstellen erfolgt also somit stufenlos, dem jeweiligen Verschleiß angepaßt.

Fig. 3 zeigt in geschnittener Darstellung die obere Hälfte eines einen im wesentlichen viereckigen Querschnitt aufweisenden Dichtringes 5. In Fig. 3 ist nur die obere Hälfte des erfindungsgemäßen Dichtringes 5 gezeigt, der gegenüber der Mittelachse 42 rotationssymmetrisch verläuft. In Fig. 3 ist die äußere Mantelfläche des gegenüber dem Dichtring 5 beweglichen Kolbens 2 durch eine Linie 44 angedeutet. Die dem nicht dargestellten Kolben zugewandte innere Mantelfläche 13 des Dichtringes 5 ist mit umlaufenden Ausnehmungen 41 versehen, die im gleichmäßigen Abstand zueinander in die innere Mantelfläche 13 eingearbeitet sind. Die Ausnehmungen 41 besitzen eine wannenförmige Kontur. Somit ergeben sich zwischen der Kolbenfläche 44 und der inneren Mantelfläche 13 des Dichtringes 5 umlaufende Kammern 45, welche einen wannenförmige in Querschnitt (48) besitzen. Die einzelnen Kammern 45 sind durch Stege 43 voneinander getrennt, die gegenüber der Kolbenfläche 44 eine schmale Auflagefläche bilden können. Bevorzugt haben die Kammern 45 eine kreissektorförmige Querschnittsfläche 48. Durch die Wahl der Breite der Stege 43 läßt sich das Verhalten der Dichtringe hinsichtlich Rückstellung (Lüftspiel) und Klebeverhalten einstellen. Der Dichtring wird vorteilhaft aus Gummi in verschiedenen Qualitäten, z. B. SBR, Styrol-Butagien-Rubber (Kautschuk) für einen Wirkungsbereich von -50°C bis +100°C und EPDM, Ethylen-Propylen-Dien Rubber für einen Wirkungsbereich von -50°C bis +130°C für Glykolbremsflüssigkeitsbetrieb gefertigt. Die nebeneinanderliegenden Ausnehmungen 41 besitzen einen gleichen Abstand zueinander, der in Fig. 3 als Abstand a zwischen zwei jeweils benachbarten Stegen 43 dargestellt ist. Der Aufbau der Ausnehmungen 41 ist, wie in Fig. 3 gezeigt, bevorzugt periodisch so daß die Einbaurichtung des Dichtringes 5 keine Rolle spielt. Darüber hinaus kann durch dieses Merkmal der Dichtring 5 von einem schlauchförmigen Material abgeschnitten werden welches an seiner inneren Fläche durchgehend die wellenförmige Kontur besitzt, wie sie in Zusammenhang mit dem Dichtring 5 beschriebenen wurde.

Versuche zeigen, daß der Streubereich der "Roll-backHübe" des Kolbens und auch des "Knock-back-Hubes" bei denen erfindungsgemäßen Dichtringen über längere Zeiträume wesentlich enger gehalten werden können als bei den bekannten Dichtringen. Hierdurch wird als Folge der Tothub des Pedales verringert und in engen Grenzen gehalten. Weil bei Fahrzeugen mit Scheibenbremsen an der Vorderachse jeglicher Einfluß vom Volumenverbrauch über den Hauptzylinder auf den Pedalweg wegen des hohen Anteils des Volumenverbrauchs der relativ großen Scheibenbremskolben besonders gespürt wird, wird der klein gehaltene Pedal-Tothub gegenüber einem "tiefen" Pedal als besonders komfortabel beim Kunden (Kfz-Benutzer) empfunden. Ein sehr tiefes Pedal, d. h. mit großem Tothub, kann dagegen ein gewisses Sicherheitsrisiko darstellen, weil bei sehr kräftigen (Not-)Bremsungen das Reservevolumen des Hauptzylinders aufgebraucht wurde und u. U. im als elastisch zu betrachtenden Bremssystem nicht genügend Druck aufgebaut werden kann. Verlängerte Bremswege und Unfallgefahren sind mit dem "tiefen" Pedal verbunden.

Die Erfindung ist auch anwendbar bei sogenannten Plunger-Kolben, bei denen der Dichtring in einer entsprechenden Nut in der äußeren Mantelfläche des Kolbens sitzt und wobei der im Zylinder bewegte Kolben entlang der Innenwand des Zylinders fährt und so die hydraulische Arbeitskammer abdichtet. In diesen Falle müssen die umlaufenden Ausnehmungen auf der äußeren Mantelfläche des Dichtringes angebracht sein. Die Erfindung ist auch einsetzbar für Manschetten in Tandem-Hauptzylindern, um Reibungsverluste zu senken (Wirkungsgradverbesserung) für Dichtungen im Regler um die Regel-Präzision zu verbessern und für Führungselemente, welche in den schmierten Gummi-Lagern laufen z. B. Dämpfungshülsen für Scheibenbremsen.

## Patentansprüche

1. Dichtring einer Kolben-Zylinder-Einheit in einer Scheibenbremse, mit einer dem Kolben (2) beziehungsweise dem Zylinder zugewandten, unebenen Lauffläche (13), **dadurch gekennzeichnet, daß** die Lauffläche (13) mit mindestens einer umlaufenden vorzugsweise ringförmigen Ausnehmung versehen ist, die in Verbindung mit der Mantelfläche (44) des Kolbens (2) beziehungsweise des Zylinders eine rinförmige Kammer (45) bildet.

2. Dichtring nach Anspruch 1, **dadurch gekennzeichnet, daß** die Lauffläche (13) mit mehreren in der axialen Richtung (42) des Kolbens nebeneinander liegenden ringförmigen Kammern (45) versehen ist.

3. Dichtring nach Anspruch 2, **dadurch gekennzeichnet, daß** die Rillen periodisch zueinander angeordnet sind insbesondere nebeneinander liegende (45) Rillen in axialer Richtung (42) des Kolbens (44) zueinander den gleichen Abstand (c) aufweisen und/oder die gleiche Querschnittsfläche (48) besitzen.

4. Dichtring nach Anspruch 1 **dadurch gekennzeichnet, daß** die Querschnittsfläche (48) der umlaufenden Ausnehmung (41) bogenförmig insbesondere kreissektorförmig ist.

5. Dichtring nach Anspruch 2, **dadurch gekennzeichnet, daß** die Ausnehmungen (41) dicht nebeneinander liegen und durch einen schmalen Steg (43) voneinander getrennt sind.
